# EUROPEAN PATENT APPLICATION

(11) **EP 4 293 738 A1**
(43) Date of publication of application: **20.12.2023**
(21) Application number: 22920830.1
(22) Date of filing: 22.12.2022
(51) Int. Cl.: H01M 4/04, H01M 4/36, H01M 4/62, H01M 4/40, H01M 4/136, H01M 10/0562

(54) **METHOD FOR MANUFACTURING ELECTRODE FOR ALL-SOLID-STATE BATTERY, AND ELECTRODE MANUFACTURED THEREBY**

(30) Priority: 12.01.2022 KR 20220004645
(71) Applicant: LG Energy Solution, Ltd., Seoul 07335 (KR)
(72) Inventor: KIM, Jeonggil, Daejeon 34122 (KR); KWON, Hyejin, Daejeon 34122 (KR); KIM, Sohee, Daejeon 34122 (KR); KIM, Taegon, Daejeon 34122 (KR); KIM, Myeongsoo, Daejeon 34122 (KR); KIM, Ki Tae, Daejeon 34122 (KR); LEE, Choonghyeon, Daejeon 34122 (KR)
(74) Representative: Goddar, Heinz J.
(86) International application number: PCT/KR2022/021074
(87) International publication number: WO 2023/136502

(57) **Abstract**

Provided is a method for manufacturing an electrode for an all-solid-state battery comprising the steps of preparing primary granules comprising an active material, an electrically conductive material, and a binder, mixing the prepared primary granules with a solid electrolyte to prepare secondary granules coated with the solid electrolyte by a mechanofusion method, and applying the prepared secondary granules on a current collector to prepare an electrode. According to one embodiment of the present invention, the primary granules have an average particle diameter (D₅₀) of 50 *µ*m to 110 *µ*m, and the secondary granules have an average particle diameter (D₅₀) of 10 *µ*m to 30 *µ*m. The electrode manufactured according to the above manufacturing method contributes to improving the performance of the battery when applied to an all-solid-state battery by improving the electrical network between the active material and the solid electrolyte.

## Description

### [Technical Field]

The present invention relates to a method for manufacturing an electrode for an all-solid-state battery and an electrode manufactured thereby. Specifically, the present invention relates to a method for manufacturing an electrode for an all-solid-state battery using secondary granules formed from primary granules by a mechanofusion method and an electrode manufactured thereby.

This application claims the benefit of priority based on Korean Patent Application No. 10-2022-0004645 filed on January 12, 2022, all contents of which are incorporated herein as a part of this specification.

### [Background Art]

Various batteries that can overcome the limitations of the current lithium secondary battery in terms of the capacity, safety, output, large size, and miniaturization of the battery are being studied.

Typically, continuous researches are being conducted in academia and industry, regarding a metal-air battery which has a very large theoretical capacity in terms of capacity compared to the lithium secondary batteries, an all-solid-state battery with no risk of explosion in terms of safety, a supercapacitor in terms of output, a NaS battery or redox flow battery (RFB) in terms of large size, a thin film battery in terms of miniaturization and the like.

Among them, the all-solid-state battery refers to a battery in which the liquid electrolyte used in the existing lithium secondary battery is replaced with a solid one, and since it does not use flammable solvents in the battery, ignition or explosion due to the decomposition reaction of the conventional electrolyte solution does not occur at all, safety can be greatly improved. In addition, since Li metal or Li alloy can be used as a material for the negative electrode, there is an advantage that the energy density for the mass and volume of the battery can be dramatically improved.

Particularly, among solid electrolytes for the all-solid-state battery, inorganic-based solid electrolytes can be classified into sulfide-based and oxide-based. Currently, the most technologically developed solid electrolyte is a sulfide-based solid electrolyte, and as a material for this solid electrolyte, a material with an ion-conductivity close to that of an organic electrolyte solution has been developed.

Since the all-solid-state battery uses a solid electrolyte unlike the conventional lithium secondary battery that uses a liquid electrolyte, solid electrolytes cannot be easily penetrated to the pores of the electrode and thus there may be problems with physical contact, etc. As a solution to these problems, a method of preparing granules containing an active material to secure pores on the outside of the granules, injecting a solid electrolyte in the liquid phase into the pores first, and then solidifying them has been studied, but the granules containing the active material could be easily detached from the current collector, and also when rolling at a high temperature to form an electrode layer, the fluidity of the granules was reduced, resulting in additional problems such as formation of an uneven surface layer.

Accordingly, the inventors of the present invention have studied a method for solving the problem of physical contact between the granules containing the active material and the solid electrolyte in the manufacture of an electrode of an all-solid-state battery, and as a result, have completed the present invention.

### [Prior Art Document]

### [Patent Document]

(Patent Document 1) Korean Laid-open Patent Publication No. 10-2016-0146737

### [Disclosure]

### [Technical Problem]

In order to improve the performance of the electrode for an all-solid-state battery, the present invention is to provide a method for manufacturing an electrode for an all-solid-state battery using secondary granules formed from primary granules by a mechanofusion method and an electrode manufactured thereby.

### [Technical Solution]

According to the first aspect of the present invention,
the present invention provides a method for manufacturing an electrode for an all-solid-state battery comprising the steps of preparing primary granules comprising an active material, an electrically conductive material, and a binder, mixing the prepared primary granules with a solid electrolyte to prepare secondary granules coated with the solid electrolyte by a mechanofusion method, and applying the prepared secondary granules on a current collector to prepare an electrode.

According to one embodiment of the present invention, the primary granules have an average particle diameter (D₅₀) of 50*µ*m to 110*µ*m.

According to one embodiment of the present invention, the secondary granules have an average particle diameter (D₅₀) of 10*µ*m to 30*µ*m.

According to one embodiment of the present invention, the primary granules have a porosity of 55% to 75%.

According to one embodiment of the present invention, the active material is a positive electrode active material, and the positive electrode active material is selected from the group consisting of LiCoO₂, LiNiO₂, LiMnO₂, Li₂MnO₃, LiMn₂O₄, Li(NiₐCo_{b}Mn_{c})O₂(0<a<1, 0<b<1, 0<c<1, a+b+c=1), LiNi_{1-y}CO_{y}O₂(0<y<1), LiCo_{1-y}Mn_{y}O₂(0<y<1), LiNi_{1-y}Mn_{y}O₂(0<y<1), Li(NiₐCo_{b}Mn_{c})O₄(0<a<2, 0<b<2, 0<c<2, a+b+c=2), LiMn_{2-z}Ni_{z}O₄(0<z<2), LiMn_{2-z}Co_{z}O₄(0<z<2 ) and combinations thereof.

According to one embodiment of the present invention, the solid electrolyte is a sulfide-based solid electrolyte, and the sulfide-based solid electrolyte is selected from the group consisting of Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS and combinations thereof.

According to one embodiment of the present invention, the primary granules contain 85% by weight to 99.8% by weight of the active material, 0.1% by weight to 10% by weight of the binder and 0.1% by weight to 10% by weight of the electrically conductive material, based on the total weight of the primary granules.

According to one embodiment of the present invention, the secondary granules contain 5% by weight to 25% by weight of a solid electrolyte based on the total weight of the secondary granules.

According to one embodiment of the present invention, the secondary granules have a porosity of 5% to 25%.

According to one embodiment of the present invention, the secondary granules are applied to a thickness of 100 *µ*m to 300 *µ*m on the current collector.

According to the second aspect of the present invention,
the present invention provides an electrode for an all-solid-state battery comprising a current collector and a granule layer formed on the current collector.

According to one embodiment of the present invention, the granule layer is composed of a plurality of granules, and the granule contains an active material, an electrically conductive material, and a binder, and has a form coated with a solid electrolyte.

According to one embodiment of the present invention, the granule has an average particle diameter (D₅₀) of 10*µ*m to 30gm.

According to one embodiment of the present invention, the solid electrolyte is contained in the granules in an amount of 5% by weight to 25% by weight based on the total weight of the granule.

### [Advantageous Effects]

According to the method for manufacturing the electrode for the all-solid-state battery according to one embodiment of the present invention, the solid electrolyte can be more densely and uniformly coated on the secondary particles that will actually be applied on the current collector, by preparing the primary particles having a large average particle size, and then mixing the solid electrolyte with the prepared primary particles to prepare the secondary particles having a smaller particle size than the primary particles through the mechanofusion method.

This improves the electrical network between the active material and the solid electrolyte, and thus when the electrode of an all-solid-state battery manufactured according to this method is applied to an all-solid-state battery, it contributes to improving the performance of the battery.

### [Description of Drawings]

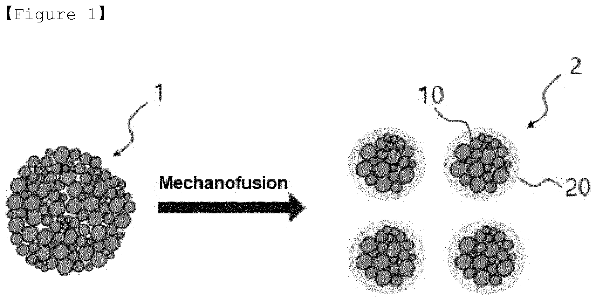

FIG. 1 is a diagram schematically illustrating a process in which the secondary granules are formed from the primary granules according to one embodiment of the present invention.

### [Best Mode]

The embodiments provided according to the present invention can all be achieved by the following description. The following description should be understood as describing preferred embodiments of the present invention, and it should be understood that the present invention is not necessarily limited thereto.

For the physical properties described herein, if the measurement conditions and methods are not specifically described, the physical properties are measured according to the measurement conditions and methods generally used by those skilled in the art.

One aspect of the present invention is to provide a method for manufacturing an electrode for an all-solid-state battery by applying granules containing an active material on a current collector. According to one embodiment of the present invention, the method of manufacturing the electrode for the all-solid-state battery comprises the steps of preparing primary granules comprising an active material, an electrically conductive material and a binder, mixing the prepared primary granules with a solid electrolyte to prepare secondary granules coated with the solid electrolyte by a mechanofusion method, and applying the prepared secondary granules on a current collector to prepare an electrode. The primary granules and the secondary granules can be distinguished by the preparation step, but also by physical characteristics such as particle size, and specific physical characteristics will be described later.

The primary granules are prepared by aggregating an active material, an electrically conductive material, and a binder. The primary granules may be prepared by a method commonly used in the art, and is not particularly limited. For example, the primary granules may be prepared by preparing a slurry, and then spray drying it. The active material, which is particulates in a powder state, is injected into a binder solution together with an electrically conductive material to grow the size of the granule to a specific level. According to one embodiment of the present invention, the primary granules are spherical particles containing an active material, an electrically conductive material and a binder. The spherical shape does not mean a complete spherical shape in a strict sense, and generally the spherical particle is used as a comprehensive concept including round-shaped particles.

According to one embodiment of the present invention, the primary granules have an average particle diameter (D₅₀) of 50*µ*m to 110*µ*m. The average diameter (D₅₀) is the particle diameter (median diameter) at 50% of the accumulation based on the volume of the particle size distribution, which refers to a particle diameter at a point where the cumulative value becomes 50% in the cumulative curve obtained by calculating the particle size distribution based on the volume and taking the total volume as 100%. The average diameter (D₅₀) may be measured by a laser diffraction method. Specifically, the average diameter (D₅₀) of the primary granules may be 50*µ*m or more, 55gm or more, 60gm or more, 65gm or more, or 70gm or more, and 110*µ*m or less, 105*µ*m or less, 100*µ*m or less, 95*µ*m or less, or 90*µ*m or less, and may be 50*µ*m to 110*µ*m, 60*µ*m to 100*µ*m, or 70*µ*m to 90*µ*m. The average diameter (D₅₀) of the primary granules is adjusted considering the particle size of the secondary granules, which are prepared by mixing the primary granules with a solid electrolyte and then treating them with a mechanofusion method.

According to one embodiment of the present invention, the primary granules have a porosity of 55% to 75%. The porosity of the granules means a volume ratio of pores in the granules, and the porosity may be measured, for example, by a BET (Brunauer-Emmett-Teller) measurement method or a mercury penetration method (Hg porosimeter), but is not limited thereto. As another example, the porosity can be calculated using other parameters such as the size, the thickness, and the density. In an all-solid-state battery, it is important that the granules containing the active material form an electrical network with the solid electrolyte. The primary granules are not the final shape to be applied on the current collector, but the porosity has a significant effect on the shape of the secondary granules. The higher the porosity of the primary granules, the better the granules can be ground. However, since easy grinding alone does not have a positive effect on the shape of the secondary granules, the porosity of the primary granules must be appropriately controlled. Specifically, the porosity of the primary granules may be 55% or more, 56% or more, 57% or more, 58% or more, 59% or more, or 60% or more, and 75% or less, 74% or less, 73% or less, 72% or less, 71% or less, or 70% or less, and may be 55% to 75%, 57% to 72%, or 60% to 70%. In the above range, the primary granules are easy to form the secondary granules in an appropriate form by the mechanofusion method.

The electrode for the all-solid-state battery according to an embodiment of the present invention may be any one of a negative electrode and a positive electrode, and more specifically, the electrode for the all-solid-state battery may be a positive electrode.

If the electrode is a negative electrode, the electrode active material contained in the primary granules is not particularly limited as long as it can be used as a negative electrode active material for a lithium-ion secondary battery. For example, the negative electrode active material may be one or more species selected from carbon such as non-graphitizable carbon and graphite-based carbon; metal composite oxides such as LiₓFe₂O₃(0≤x≤1), LiₓWO₂(0≤x≤1), SnₓMe₁₋ₓMe'_{y}O₂(Me: Mn, Fe, Pb, Ge; Me': Al, B, P, Si, elements of groups 1, 2, and 3 of the periodic table, halogen; 0<x≤1; 1≤y≤3; 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅, etc.; an electrical conductivity polymer such as polyacetylene; Li-Co-Ni based material; titanium oxide; and lithium titanium oxide. According to one embodiment of the present invention, the negative electrode active material may comprise a carbonaceous material and/or Si.

If the electrode is a positive electrode, the electrode active material contained in the primary granules is not particularly limited as long as it can be used as a positive electrode active material for a lithium-ion secondary battery. For example, the positive electrode active material may be a lithium transition metal oxide containing one or more transition metals. According to one embodiment of the present invention, The positive electrode active material is selected from the group consisting of LiCoO₂, LiNiO₂, LiMnO₂, Li₂MnO₃, LiMn₂O₄, Li(NiₐCo_{b}Mn_{c})O₂(0<a<1, 0<b<1, 0<c<1, a+b+c=1), LiNi_{1-y}CO_{y}O₂(0<y<1), LiCo_{1-y}Mn_{y}O₂(0<y<1), LiNi_{1-y}Mn_{y}O₂(0<y<1), Li(NiₐCo_{b}Mn_{c})O₄(0<a<2, 0<b<2, 0<c<2, a+b+c=2), LiMn_{2-z}Ni_{z}O₄(0<z<2), LiMn_{2-z}Co_{z}O₄(0<z<2) and a combination thereof.

The electrically conductive material contained in the primary granules is not particularly limited as long as it is located in the granule and can impart conductivity between the active material and the electrolyte. For example, the electrically conductive material may be nickel powder, cobalt oxide, titanium oxide, carbon, or the like, and the carbon may be any one selected from the group consisting of Ketjen black, acetylene black, furnace black, graphite, carbon fiber, and fullerene, or one or more types of these.

The binder comprised in the primary granules according to one embodiment of the present invention is mixed with the active material and the electrically conductive material, which are fine particles in a powder state, and binds the respective components to each other to help the growth of the particles. Among solid electrolytes, a sulfide-based solid electrolyte is sensitive to moisture, for example, if it comes into contact with moisture, it generates H₂S gas, etc. and thus it is preferable to exclude moisture as much as possible at the time of forming the granules. According to one embodiment of the present invention, the binder is an organic binder. The organic binder means a binder that is dissolved or dispersed in an organic solvent, particularly N-methylpyrrolidone (NMP), and is distinguished from an aqueous binder using water as a solvent or dispersion medium. Specifically, the organic binder may be selected from the group consisting of polyvinylidene fluoride (PVDF), vinylidenfluoride-hexafluoropropylene copolymer (PVDF-co-HFP), polyvinyl alcohol, starch, hydroxypropylcellulose, regenerated cellulose, polyvinylpyrrolidone, polyimide, polyamideimide, polyethylene, polypropylene, ethylene-propylene-diene monomer (EPDM), sulfonated EPDM, styrene butadiene rubber and fluorine rubber, but is not limited thereto.

According to one embodiment of the present invention, the content of the active material in the primary granules is 85 % by weight to 99.8 % by weight, specifically 88 % by weight to 99.5 % by weight, and more specifically 90 % by weight to 99.3 % by weight, and the content of the binder is 0.1 % by weight to 10 % by weight, specifically 0.2 % by weight to 8 % by weight, and more specifically 0.3 % by weight to 7 % by weight, and the content of the electrically conductive material is 0.1 % by weight to 10 % by weight, specifically 0.2 % by weight to 8 % by weight, and more specifically 0.3 % by weight to 7 % by weight. When the content of the active material, the binder and the electrically conductive material are adjusted within the above-mentioned ranges, it may be advantageous to improve the performance of the battery.

The prepared primary granules were mixed with a solid electrolyte to prepare secondary granules coated with the solid electrolyte by a mechanofusion method. FIG. 1 schematically shows the process of forming the secondary granules from the primary granules. As shown in FIG. 1, as the structure of the primary granule 1 is collapsed by the mechanofusion method, the collapsed primary granules 10 are coated with solid electrolyte 20 to form the secondary granules 2.

The solid electrolyte may be coated on at least part or all the surface of the collapsed primary granules. The solid electrolyte may be at least one type selected from a polymer-based solid electrolyte, a sulfide-based solid electrolyte, and an oxide-based solid electrolyte. The polymer-based solid electrolyte may be a polymer solid electrolyte formed by adding a polymer resin to a solvated lithium salt, or may be a polymer gel electrolyte prepared by incorporating an organic solvent and a lithium salt-containing organic electrolyte solution, an ionic liquid, a monomer or an oligomer, and the like into a polymer resin. According to one embodiment of the present invention, the lithium salt is an ionizable lithium salt, which may be expressed as Li⁺X⁻. The anion of the lithium salt is not particularly limited, but F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF-, (CF₃)₆P-, CF₃SO₃⁻, CF₃CF₂SO₃⁻, (CF₃SO₂)₂N-, (FSO₂)₂N-, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, (CF₃CF₂SO₂)₂N⁻ and the like can be exemplified.

According to one embodiment of the present invention, the solid electrolyte is a sulfide-based solid electrolyte. The sulfide-based solid electrolyte contains sulfur (S) and has ionic conductivity of a metal belonging to group 1 or group 2 of the periodic table, which may comprise Li-P-S-based glass or Li-P-S-based glass ceramics. Non-limiting examples of such a sulfide-based solid electrolyte may be Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS and the like, and may comprise one or more of these.

The method of coating the solid electrolyte on the granules containing the active material may be performed by various methods commonly used in the art, but may be performed by a coating method capable of forming mechanochemical bonding to increase the binding force between the solid electrolyte coating layer and the granules. According to one embodiment of the present invention, as a method of coating the solid electrolyte on the granules, a mechanofusion method that can apply high shear force during coating is used. The mechanofusion method basically applies a high shear force to the granules, and accordingly, the shape of the granules may be deformed or collapsed depending on the physical properties of the granules. The primary granules according to one embodiment of the present invention have a larger particle size and larger pores than the secondary granules to be actually coated on the current collector, so that their structure can be more easily collapsed by the mechanofusion method. According to one embodiment of the present invention, the mechanofusion method may be performed for 5 minutes to 20 minutes at a rotation speed of 1000 rpm to 5000 rpm. Specifically, the rotation speed may be 1000 rpm to 5000 rpm, 1500 rpm to 4500 rpm, 2000 rpm to 4000 rpm, or 2500 rpm to 3500 rpm, and the running time may be 5 minutes to 20 minutes, 8 minutes to 17 minutes, or 10 minutes to 15 minutes. In the above range, it is possible to form the secondary granules of an appropriate size densely coated with a solid electrolyte.

According to one embodiment of the present invention, The secondary granules have an average particle diameter (D₅₀) of 10*µ*m to 30*µ*m. The average diameter (D₅₀) of the secondary granules is measured in the same way as for the primary granules. Specifically, the average diameter (D₅₀) of the secondary granules may be 10*µ*m or more, 11*µ*m or more, 12*µ*m or more, 13*µ*m or more, 14*µ*m or more, 15*µ*m or more, or 16*µ*m or more, and 30*µ*m or less, 29*µ*m or less, 28*µ*m or less, 27*µ*m or less, 26*µ*m or less, 25*µ*m or less, or 24*µ*m or less, and may be 10*µ*m to 30*µ*m, 13*µ*m to 27*µ*m, or 16gm to 24*µ*m. In the above average diameter range, the secondary granules are easier to form an electrical network between the solid electrolyte and the active material, and when they are stacked on the current collector, more than a certain level of voids can be introduced between the granules, and thus the introduction of additional solid electrolytes can be facilitated.

According to one embodiment of the present invention, the secondary granules have a porosity of 5% to 25%. The porosity of the secondary granules is measured in the same way as for the primary granules. Specifically, the porosity of the secondary granules may be 5% or more, 6% or more, 7% or more, 8% or more, 9% or more, or 10% or more, and 25% or less, 24% or less, 23% or less, 22% or less, 21% or less, or 20% or less, and may be 5% to 25%, 7% to 22%, or 10% to 20%. The secondary granules have a lower porosity than the primary granules because they are formed by collapsing the primary granules and coated with a solid electrolyte. In the above porosity range, the secondary granules can form a moderate electrical network between the solid electrolyte and the active material.

According to one embodiment of the present invention, the secondary granules contain 5% by weight to 25% by weight of a solid electrolyte based on the total weight of the secondary granules. Specifically, the content of the solid electrolyte may be 5 % by weight or more, 6 % by weight or more, 7 % by weight or more, 8 % by weight or more, 9 % by weight or more, or 10 % by weight or more, and 25 % by weight or less, 24 % by weight or less, 23 % by weight or less, 22 % by weight or less, 21 % by weight or less, or 20 % by weight or less, and may be 5 % by weight to 25 % by weight, 7 % by weight to 22 % by weight, or 10 % by weight to 20 % by weight. In the secondary granules, it is preferable to appropriately adjust the relationship between the solid electrolyte and the active material. If the content of the solid electrolyte is too high, the content of the active material may be lowered, which is unpreferable. If the content of the solid electrolyte is too low, it is difficult to form an electrical network between the solid electrolyte and the active material. In the case of coating a solid electrolyte by the mechanofusion method according to one embodiment of the present invention, the content of the solid electrolyte can be increased in that the solid electrolyte can be sufficiently supplied between the pores of the granules, but the content of the solid electrolyte can be lowered in that the solid electrolyte can be uniformly coated on the entire surface of the granules.

The electrode for the all-solid-state battery according to one embodiment of the present invention is prepared by loading the secondary granules prepared on a current collector to form the granule layer in the form of a sheet. In this case, the current collector represents an electrical conductive material such as the metal plate, etc., and electrodes known in the art may be appropriately used depending on the polarity of the battery. Since the secondary granules constituting the granule layer are individually coated with solid electrolytes, a sufficient electrical network can be formed between the granules constituting the granule layer. Nevertheless, the afore-mentioned electrical network can be also complemented by impregnating the solid electrolyte into the pores between the granule layers and drying them. As for the additionally supplemented solid electrolyte, using the same type of solid electrolyte as the coating layer can contribute to improving the performance of the battery by reducing the resistance in the battery.

According to one embodiment of the present invention, the secondary granules are applied to a thickness of 100 gm to 300 gm on the current collector. In other words, in the electrode for the all-solid-state battery, the electrode active material layer has a thickness of 100 gm to 300 gm. Here, the electrode active material layer means a layer in the form of a sheet applied on the current collector excluding the current collector when the current collector is used in the manufacture of the electrode, and the electrode active material layer includes the above-described granules and a solid electrolyte supplemented in voids between the granules as needed. Specifically, the thickness of the electrode active material layer may be 100*µ*m or more, 110*µ*m or more, 120*µ*m or more, 130*µ*m or more, 140*µ*m or more, or 150*µ*m or more, and 300*µ*m or less, 290*µ*m or less, 280*µ*m or less, 270*µ*m or less, 260*µ*m or less, or 250*µ*m or less, and may be 100*µ*m to 300*µ*m, 120*µ*m to 270*µ*m, or 150*µ*m to 250*µ*m. If the thickness of the electrode active material layer is less than the above range, the loading amount of the active material is reduced, so that the performance of the battery may not be clearly improved. If the thickness of the electrode active material layer exceeds the above range, the durability of the electrode is lowered, and thus, the improvement of the performance of the battery may not be evident.

According to one embodiment of the present invention, the porosity of the granule layer formed by applying the secondary granules on the current collector is 30% to 60%. Here, the granule layer means a region formed by the granules applied on the current collector, and means the same layer as the electrode active material layer in which no additional solid electrolyte is introduced other than the secondary granules. The porosity of the granule layer is measured in the same way as for the primary granules or the secondary granules. Specifically, the porosity of the granule layer may be 30% or more, 31% or more, 32% or more, 33% or more, 34% or more, or 35% or more, and 60% or less, 59% or less, 58% or less, 57% or less, 56% or less, or 55% or less, and may be 30% to 60%, 32% to 57%, or 35% to 55%. If necessary, an additional solid electrolyte may be introduced into the pores of the granule layer.

In one aspect of the present invention, the present invention provides an all-solid-state battery comprising the above-described electrode for all-solid-state battery as a positive electrode and/or a negative electrode. In configuring the all-solid-state battery, a separate solid electrolyte layer may be introduced between the positive electrode and the negative electrode in addition to the solid electrolyte comprised in the electrode, and this solid electrolyte layer can play the same role as a separator in a general lithium secondary battery at the same time. In some cases, the above-described electrode can be used for a semi-solid battery by using a liquid electrolyte together, and in this case, a separate polymer separator may be further required.

The polymer separator is interposed between the negative electrode and the positive electrode, which serves to electrically insulate the negative electrode and the positive electrode while allowing lithium ions to pass therethrough. The polymer separator may be any one used as a polymer separator membrane used in the field of general all-solid-state batteries and is not particularly limited.

In one aspect of the present invention, the present invention provides a battery module comprising the all-solid-state battery as a unit battery, a battery pack comprising the battery module, and a device comprising the battery pack as a power source.

Specific examples of the device may comprise, but are not limited to, a power tool that is powered by an electrical motor; electric cars comprising an electric vehicle (EV), a hybrid electric vehicle (HEV), a plug-in hybrid electric vehicle (PHEV), and the like; an electric motorcycle comprising an electric bike (E-bike) and an electric scooter (E-scooter); an electric golf cart; and a power storage system.

Hereinafter, preferred embodiments are presented to aid understanding of the present invention, but the following examples are provided to more easily understand the present invention, but the present invention is not limited thereto.

### Example

### Example 1

LiNi_{0.6}Co_{0.2}Mn_{0.2}O₂ (NCM 622) as an active material, carbon black as an electrically conductive material and polyvinylidene fluoride (PVDF) as a binder were mixed in a weight ratio of 94: 3: 3 (active material: electrically conductive material: binder) in N-methylpyrrolidone solvent to prepare a slurry, and then from this, the primary granules having an average diameter (D₅₀) of about 80 *µ*m (porosity: about 65%) were prepared by spray drying.

The mechanofusion device (manufacturer: Hosokawa Micron company, product: Nobilta NOB-130) was driven at 3,000 rpm for 10 minutes, while using Li₂S-P₂S₅ as a sulfide-based solid electrolyte together with the prepared primary granules, to prepare secondary granules (porosity: about 16%) with an average diameter (D₅₀) of about 20 *µ*m coated with about 15% by weight of the sulfide-based solid electrolyte.

Here, the average diameter (D₅₀) was measured using a particle analyzer (manufacturer: Malvern, product name: Mastersizer), and the porosity was measured using a mercury porosity analyzer (manufacturer: Micromeritics, product name: Autopore) .

Meanwhile, the prepared secondary granules were coated on an aluminum current collector of about 100 *µ*m, and then roll-pressed to prepare a positive electrode with a thickness of about 300 *µ*m. The granule layer at the positive electrode has a porosity of about 45%.

Additionally, Li₂S-LiCl-P₂S₅ was mixed with a polyvinylidene fluoride (PVDF) solution (a solution obtained by mixing PVDF and toluene in a weight ratio of 8:92) to prepare a slurry, and then the resulting slurry was dried to prepare a solid electrolyte membrane with a thickness of about 50 *µ*m. A lithium foil having a thickness of about 100 *µ*m was used as the negative electrode. The positive electrode, the solid electrolyte membrane, and the negative electrode were laminated and compressed to manufacture an electrode assembly, and then the resulting electrode assembly was placed inside the battery case to manufacture an all-solid-state battery.

### Comparative Example 1

An all-solid-state battery was manufactured in the same manner as in Example 1, except that primary granules having an average diameter (D₅₀) of about 150 *µ*m are prepared and used.

### Comparative Example 2

An all-solid-state battery was manufactured in the same manner as in Example 1, except that when manufacturing the positive electrode, primary granules having an average diameter (D₅₀) of about 20 *µ*m are prepared and used.

### Comparative Example 3

An all-solid-state battery was manufactured in the same manner as in Example 1, except that when manufacturing the positive electrode, a simple mechanical mixing device (manufacturer: Red Devil company, product: Classic Shaker 1400, conditions: 60Hz, 60 minutes) is used instead of the mechanofusion device.

The average diameters (D₅₀) of the primary granules and the secondary granules prepared according to Example 1 and Comparative Examples 1 to 3 are shown in Table 1 below.

**Table 1:**

| | Average diameter of primary particles (D₅₀, *µ*m) | Average diameter of secondary particles (D₅₀, *µ*m) |
|---|---|---|
| Example 1 | 80 | 20 |
| Comparative Example 1 | 150 | 70 |
| Comparative Example 2 | 20 | 10 |
| Comparative Example 3 | 80 | 25 |

### Experimental Example: Evaluation of Performance of Manufactured Battery

The all-solid-state batteries manufactured according to Example 1 and Comparative Examples 1 to 3 were charged/discharged to measure the discharging capacity (mAh/g) and coulombic efficiency (%) in the first cycle, and the results are shown in Table 2 below. When evaluating the performance of the battery, charging/discharging was performed at a temperature of 60°C, under the following conditions.
Charging condition: 0.05C, 4.25V CC/CV, 0.01C cut-off
Discharging condition: 0.05C, 3V

**Table 2:**

| | Discharging capacity (mAh/g) | Coulombic efficiency (%) |
|---|---|---|
| Example 1 | 180.1 | 91.2 |
| Comparative Example 1 | 82.5 | 72.5 |
| Comparative Example 2 | 111.4 | 65.0 |
| Comparative Example 3 | 124.8 | 73.8 |

According to Table 2, in the case of Example 1, the primary particles were broken into the secondary particles of an appropriate size by strong shear force according to the mechanofusion method, and the solid electrolyte was thinly and uniformly coated on the surface of the broken secondary particles. Accordingly, the all-solid-state battery of Example 1 showed high discharging capacity and high coulombic efficiency.

In contrast, in the case of Comparative Example 1, the size of the primary particles was large, and thus even if a strong shear force was applied according to the mechanofusion method, they were broken into relatively large secondary particles. Accordingly, the solid electrolyte is coated only on the surface of the large secondary particles, and thus since the active material inside the particles cannot easily contact the solid electrolyte, the all-solid-state battery of Comparative Example 1 did not show discharging capacity and coulombic efficiency as high as those of Example 1.

In the case of Comparative Example 2, since the size of the primary particles including the active material, electrically conductive material, and the binder was too small, when a strong shear force was applied according to the mechanofusion method, there have been cases where the electrically conductive material and the binder were individually separated and coated by the solid electrolyte. Since this can act as a resistance in utilizing an active material, the all-solid-state battery of Comparative Example 2 did not show discharging capacity and coulombic efficiency as high as those of Example 1.

In the case of Comparative Example 3, even if the mechanical mixing method is used, it is possible to form the secondary particles of an appropriate size similar to Example 1, but when the surface of the particles is analyzed in detail, the solid electrolyte was not coated thinly and uniformly on the surface of the secondary particles, and was non-uniformly agglomerated and coated in the form of islands. Accordingly, the all-solid-state battery of Comparative Example 3 did not show discharging capacity and coulombic efficiency as high as those of Example 1 because the active material and the solid electrolyte do not properly electrically contact.

All simple modifications or changes of the present invention belong to the scope of the present invention, and the specific protection scope of the present invention will be clarified by the appended claims.

### [Description of Reference Numerals]

1: Primary granule
2: Secondary granules
10: Collapsed primary granules (containing active material, electrically conductive material, and binder)
20: Solid electrolyte

## Claims

1. A method for manufacturing an electrode for an all-solid-state battery, comprising:
(1) preparing primary granules comprising an active material, an electrically conductive material and a binder;
(2) mixing the primary granules with a solid electrolyte to prepare secondary granules coated with the solid electrolyte by a mechanofusion method; and
(3) applying the secondary granules on a current collector to manufacture an electrode.

2. The method for manufacturing the electrode for the all-solid-state battery according to claim 1, wherein the primary granules have an average particle diameter (D₅₀) of 50 *µ*m to 110 *µ*m.

3. The method for manufacturing the electrode for the all-solid-state battery according to claim 1, wherein the secondary granules have an average particle diameter (D₅₀) of 10 *µ*m to 30 *µ*m.

4. The method for manufacturing the electrode for the all-solid-state battery according to claim 1, wherein the primary granules have a porosity of 55% to 75%.

5. The method for manufacturing the electrode for the all-solid-state battery according to claim 1, wherein the active material is a positive electrode active material, and the positive electrode active material is selected from the group consisting of LiCoO₂, LiNiO₂, LiMnO₂, Li₂MnO₃, LiMn₂O₄, Li(NiₐCo_{b}Mn_{c})O₂(0<a<1, 0<b<1, 0<c<1, a+b+c=1), LiNi_{1-y}CO_{y}O₂(0<y<1), LiCo_{1-y}Mn_{y}O₂(0<y<1), LiNi_{1-y}Mn_{y}O₂(0<y<1), Li(NiₐCo_{b}Mn_{c})O₄(0<a<2, 0<b<2, 0<c<2, a+b+c=2), LiMn_{2-z}Ni_{z}O₄(0<z<2), LiMn_{2-z}Co_{z}O₄(0<z<2) and combinations thereof.

6. The method for manufacturing the electrode for the all-solid-state battery according to claim 1, wherein the solid electrolyte is a sulfide-based solid electrolyte, and the sulfide-based solid electrolyte is selected from the group consisting of Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS and combinations thereof.

7. The method for manufacturing the electrode for the all-solid-state battery according to claim 1, wherein the primary granules contain 85% by weight to 99.8% by weight of the active material, 0.1% by weight to 10% by weight of the binder and 0.1% by weight to 10% by weight of the electrically conductive material, based on the total weight of the primary granules.

8. The method for manufacturing the electrode for the all-solid-state battery according to claim 1, wherein the secondary granules contain 5% by weight to 25% by weight of the solid electrolyte, based on the total weight of the secondary granules.

9. The method for manufacturing the electrode for the all-solid-state battery according to claim 1, wherein the secondary granules have a porosity of 5% to 25%.

10. The method for manufacturing the electrode for the all-solid-state battery according to claim 1, wherein the secondary granules are applied to a thickness of 100 *µ*m to 300 *µ*m on the current collector.

11. An electrode for an all-solid-state battery comprising a current collector and a granule layer formed on the current collector,
wherein the granule layer is composed of a plurality of granules,
the granules contain an active material, an electrically conductive material, and a binder, and are coated with a solid electrolyte,
the granules have an average particle diameter (D₅₀) of 10 *µ*m to 30 *µ*m, and
the solid electrolyte is contained in the granules in an amount of 5% by weight to 25% by weight based on the total weight of the granules.
